Europäisches Patentamt

European Patent Office

Office européen des brevets

(11) Publication number: **0 374 989**
**A1**

## EUROPEAN PATENT APPLICATION

(21) Application number: **89202913.3**

(22) Date of filing: **16.11.89**

(51) Int. Cl.5: **B65G 57/14**

(30) Priority: **17.11.88 NL 8802838**

(43) Date of publication of application:
**27.06.90 Bulletin 90/26**

(84) Designated Contracting States:
**BE DE ES FR GB NL**

(71) Applicant: **N.V. SOENEN**
**190, Wijnendalestraat**
**B-8800 Roeselare(BE)**

(72) Inventor: **Soenen, Hubert**
**15, Princes Josephine Charlotte Laan**
**B-8800 Roeselare(BE)**

(74) Representative: **Iemenschot, Johannes**
**Andreas**
**Exterpatent P.O. Box 90649**
**NL-2509 LP The Hague(NL)**

(54) Discharge and stacking device for sheet material.

(57) Discharge and stacking device for sheet material, comprising a closed conveyor track (1) whose path runs over one or more stacking points (3), several sheet conveyance trolleys (4) which are guided around on or at the conveyor track (1), means for loading one or more sheets (8) on the sheet conveyance trolleys (4), means for unloading said sheets (4) at the stacking points (3), and means for clamping the sheets (8) on the sheet conveyance trolleys (4).

FIG. 1

## Discharge and stacking device for sheet material.

The invention relates to a device with which sheets of different dimensions can be discharged, on the one hand, and can be stacked automatically and selectively in any desired number of stacks, on the other.

The present invention is for use in businesses which are involved in the production, processing or machining of sheets of plastic, metal or any other material with limited dimensions. Due to the increasing degree of automation of the various production, processing and machining processes, productivity increases and there is a fall in the interval between delivery of the finished sheets. A modern angle cutting machine, for example, with which large sheets are cut to a number of smaller sheets of different dimensions by means of two shears directed at right angles to each other, can achieve an average delivery interval of less than 10 seconds. This means that the time available for removal and stacking of a delivered sheet becomes increasingly shorter. Particularly in those cases where the successive delivered sheets have to be stacked selectively on a large number of stacking points according to a number of criteria such as, for example, the dimensions of said sheets, the need arises for an automated discharge and stacking device.

The object of the present invention is therefore to provide such a device.

The device according to the invention comprises, on the one hand, a closed conveyor track whose path runs over one or more stacking points, several sheet conveyance trolleys which are guided around on or at the conveyor track, means for loading one or more sheets on the sheet conveyance trolleys, and cams which are disposed at the stacking points and are displaceable between a position outside the path of the sheets lying on the sheet conveyance trolleys and a position at the level of the sheets lying on a sheet conveyance trolley, the sheets lying on a sheet conveyance trolley knocking against the cams and thereby being pushed off the further moving sheet conveyance trolley.

The device according to the invention is also characterized in that the cams are displaceable to and fro along a path in a direction which is essentially parallel to the direction of movement of the sheet conveyance trolleys, and are provided with drive means which in a first phase drive the cams in the same direction as that of the sheet conveyance trolleys, and at a speed which decreases from practically the sheet conveyance trolley speed to a standstill, and which in a second phase return the cams to their initial position.

The displaceability of the cams, by means of which the sheets can be unloaded from the sheet conveyance trolley, is very important in the present invention. For, the displaceability of the cams makes it possible to convey the sheet conveyance trolleys at a constant speed along the conveyor track without having to stop them for the unloading of the sheets. This substantially simplifies the design of the conveyor track, the sheet conveyance trolleys and their drive means. The sheet conveyance trolleys can therefore be coupled, preferably with a fixed distance between them, to a drive chain which follows the path of the conveyor track all the way round, and which is driven at a constant speed.

In a preferred embodiment of the invention, the drive means of the cams consist of a cam plate placed on the sheet conveyance trolley and a cam follower which is connected by means of a rod system to the cams, and which mates with the cam plate when the cams are in their position at the level of the sheet conveyance trolleys, and of an elastic element, such as a spring, which forces the cams into their initial position. This mechanical construction is relatively simple in design and requires no additional control means to set said drive means in motion in synchronism with the sheet lying on an arriving sheet conveyance trolley.

The device according to the invention comprises, on the other hand, a closed conveyor track whose path runs over one or more stacking points, several sheet conveyance trolleys which are guided around on or at the conveyor track, and whose bearing surface consists of several forks, means for discharging the sheets lying on the sheet conveyance trolleys at the stacking points, and a loading conveyor belt which partially runs alongside the path of the conveyor track and consists of several parallel belts which are separated by a space, and between which the forks of the sheet conveyance trolleys can move, said loading conveyor belt moving in the same direction and at greater speed than the speed of the sheet conveyance trolleys.

The shape of both the bearing surface of the sheet conveyance trolleys and that of the loading conveyor belt, and the way in which the loading conveyor belt cooperates with the sheet conveyance trolleys, are important in the present invention because, even when sheets are being loaded onto the sheet conveyance trolleys, the latter do not have to be brought to a standstill. Due to the difference in speed between the sheet conveyance trolleys and the loading conveyor belt, the sheets are pushed along the common path by the loading conveyor belt onto the sheet conveyance trolleys.

In a preferred embodiment of the device according to the invention, the finished sheets are delivered onto a loading table which comprises a number of strips lying between the belts of the loading conveyor belt, and which is displaceable between a position in which a delivered sheet is collected and a position in which the top face of the loading table lies below· that of the loading conveyor belt and the delivered sheet is carried along by the loading conveyor belt.

In a preferred embodiment of the invention, the sheet conveyance trolleys are provided with a clamping device which can clamp the loaded sheets, and which is opened during loading and unloading of the sheets. This clamping device is necessary to hold the sheets, after they have been loaded onto the sheet conveyance trolleys, in a fixed position relative to the sheet conveyance trolleys during their conveyance and when they knock against the cams, so that the sheets are unloaded lying in the same direction on a stacking point.

The above will be explained in the description below of a preferred embodiment, without any restricting nature, with reference to the appended figures, in which:

Fig. 1 is a side view of a sheet finishing machine, downstream of which a device according to the invention is set up;

Fig. 2 is a schematic side view of a first part of the loading device of the device according to the invention;

Fig. 3 is a schematic top view of a first part of the loading device of the device according to the invention;

Fig. 4 is a schematic side view of a second part of the loading device of the device according to the invention;

Fig. 5 is a schematic side view, along BB in Fig. 8, of an unloading device of the device according to the invention, in which the unloading device is not in operation;

Fig. 6 corresponds to Fig. 5, with the unloading device being in operation;

Fig. 7 is a side view, along CC in Fig. 8, of an unloading device of the device according to the invention;

Fig. 8 is a horizontal cross-section, along AA in Figs. 6 and 7, of an unloading device of the device according to the invention, with the unloading device being in operation.

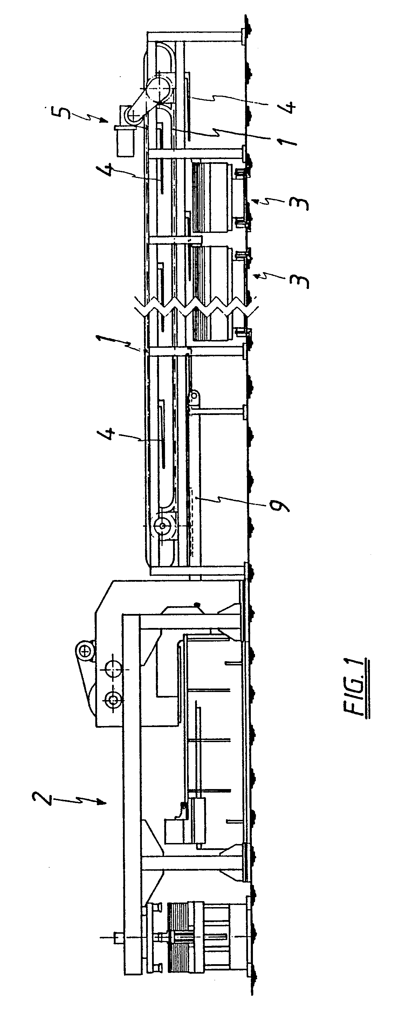

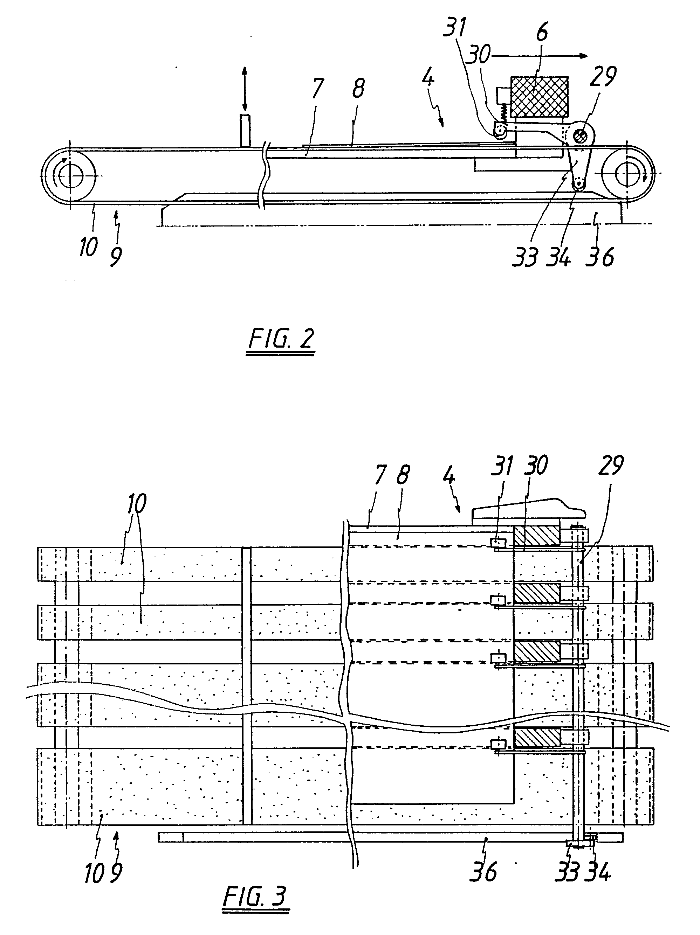

The device according to the invention, Fig. 1, comprises a closed conveyor track (1), the path of which leads from a sheet working machine (2) to different stacking points (3). The conveyor track (1) is provided with several sheet conveyance trolleys (4) which are moved by a drive device (5) along the conveyor track (1). The drive device (5) preferably acts upon a drive chain which follows the path of the conveyor track all the way round, and to which the sheet conveyance trolleys are connected at certain intervals. Said sheet conveyance trolleys are preferably various forks (7) suspended parallel to each other from a crossbar (6), Figs. 2, 3, 5 and 8, on which a sheet (8) can rest.

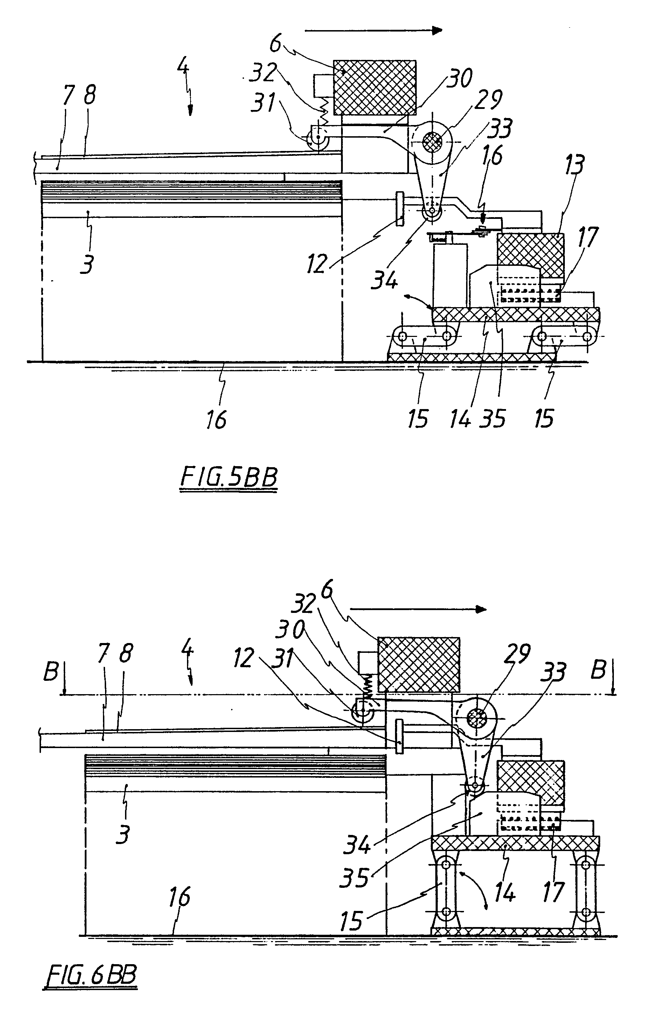

The device according to the invention is provided with an automatic loading device, Figs. 2, 3 and 4, and with an automatic unloading device, Figs. 5, 6, 7 and 8, at each stacking point.

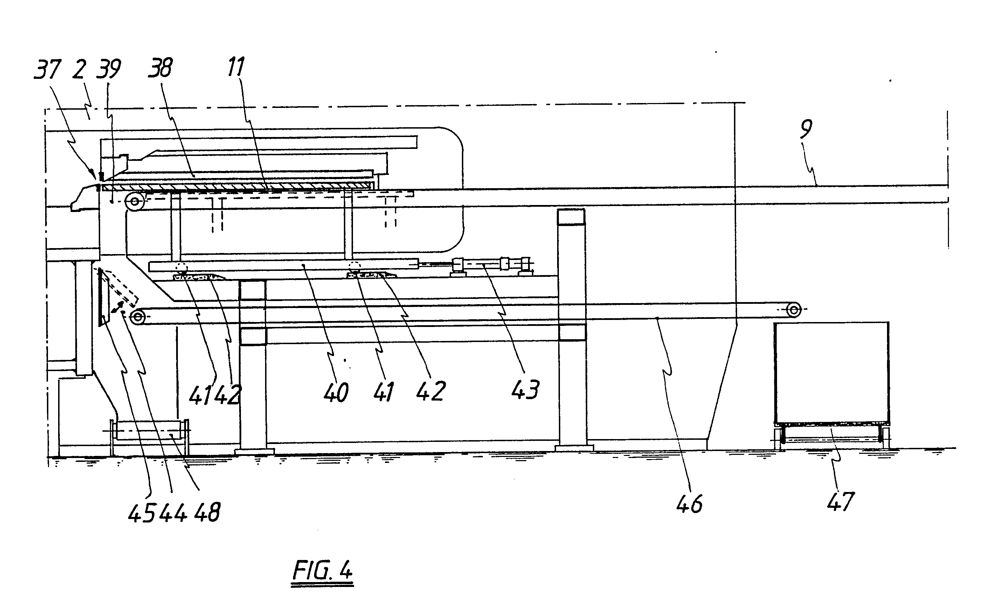

The loading device, Fig. 2, comprises a loading conveyor belt (9) onto which the sheet working machine (2) delivers the finished sheets. Said loading conveyor belt (9) is made up of several parallel belts (10) whose width and the intervals between them correspond to the width and intervals between the forks (7) of the sheet conveyance trolleys, in such a way that said forks (7) fit between the belts (10), Fig. 3. The loading conveyor belt (9) and the conveyor track (1) run partially alongside, in such a way that the forks (7) of the sheet conveyance trolleys (4) are lowered between the belts (10) and along that common path move parallel to and between the belts (10). The direction of movement of the sheet conveyance trolleys (4) is the same here as that of the top surface of the loading conveyor belt (9), while the speed of the loading conveyor belt (9) is greater than that of the sheet conveyance trolleys (4). The top surface of the forks (7) and that of the loading conveyor belt (9) are also at a slight angle to each other, in such a way that at the beginning of the common path the top surface of the forks (7) is lying lower than that of the loading conveyor belt (9) and at the end of the path is lying higher. The loading device is also provided with a mobile loading table (11), Fig. 4, which is made up of different strips fitting between the belts (10) of the loading conveyor belt (9), and which is movable between a position in which the end of the sheet to be processed or the smallest possible processed sheet is supported or collected (solid line Fig. 4) and a position in which the top surface of the loading table (11) comes to lie below the top surface of the belts (10), and a sheet finished by the sheet working machine (2) is carried along by the loading conveyor belt (9).

In Fig. 4 the loading device of the device according to the invention is set up at an angle cutting machine whose one shear (37) is shown in cross-section, and the second shear (38) in elevation. Between loading conveyor belt (9) and shear (37) there is an aperture (39) along which the scrap or the finished sheets which are too small to be conveyed away by means of the sheet conveyor trolleys (4) are discharged. This aperture (39) is shut or left open by means of the loading table (11), according to the type or dimensions of the piece of sheet which has to be cut off. For this, the loading table (11) is placed on a rolling undercarriage (40). The rollers (41) of the undercarriage (40) rest on a running surface (42) which slopes downwards at one end. The undercarriage (40) can, for example, be rolled between a position in which the loading table (11) goes against the shear (37) and a position in which the rollers (41) have rolled off the running surface (42) and the loading table (11) is lower than the belts (10), and the aperture (39) is open. Below said aperture (39) is a second aperture (44) which is opened or closed by a controlled valve (45). The scrap is separated from the small finished sheets by means of valve (45). When closed (dotted line, Fig. 4), the valve (45) guides the sheet material to a second conveyor belt (46) which leads in turn to a number of collection containers (47) to be placed below the end of said second conveyor belt according to the dimensions of the sheets. When open (solid line, Fig. 4), the valve (45) guides the sheet material or the scrap to a discharge device (48), which may be provided with a cutting device which reduces said dimensions of the scrap.

This loading device works as follows: The loading table (11) and the valve (45) are positioned according to the destination of the next sheet. If said sheet is to be discharged by means of the sheet conveyance trolleys (4), said sheet is collected by the loading table (11) and then lowered onto the conveyor belt in synchronism with the moment at which the forks (7) of a sheet conveyance trolley (4) are inserted between the belts (10). The sheet is then carried along by the loading conveyor belt (9) and, due to the difference in speed, overtakes the sheet conveyance trolley (4), so that the sheet is taken above the moving forks (7). At the same time the top surface of the loading conveyor belt drops below that of the forks (7), so that the sheet comes to rest on the forks (7) and is carried along by said forks. For proper functioning, the control of the loading table (11), the length of the common path, the speed and the distribution of the sheet conveyance trolley (4) and the speed of the loading conveyor belt (9) must be synchronized.

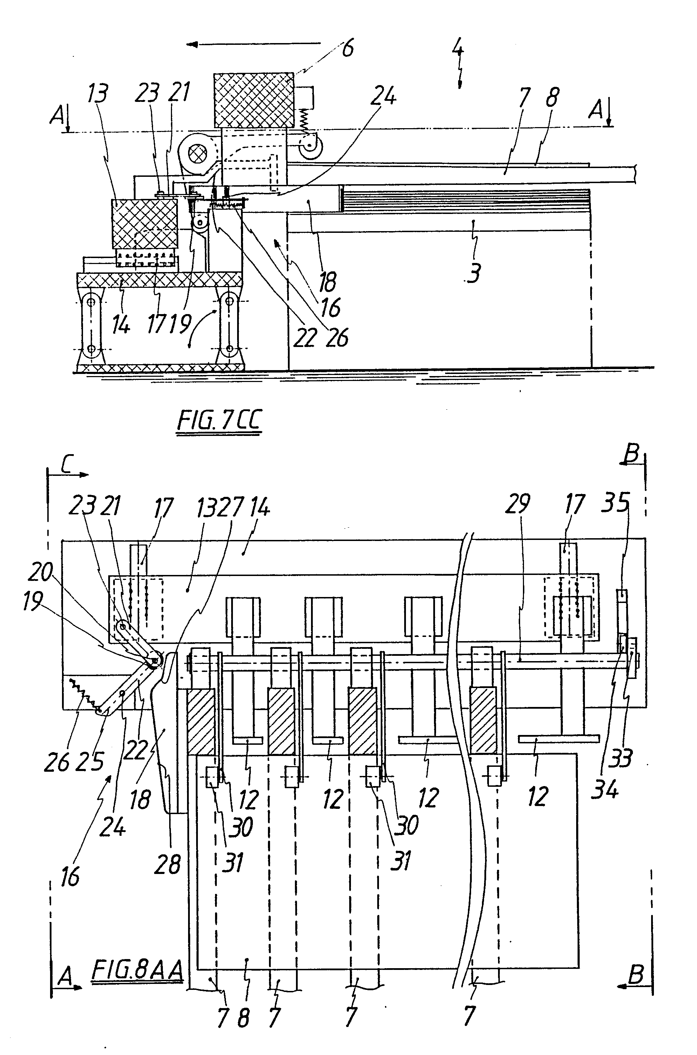

The unloading devices, Figs. 5, 6, 7 and 8, at the stacking points (3) comprise a number of cams (12) which can be moved between a position outside the path of the sheets (8) lying on the sheet conveyance trolleys (4), Fig. 5, and a position at the level of the sheets (8) lying on a sheet conveyance trolley (4), Figs. 6 and 7.

In the embodiment of the sheet conveyance trolleys (4) described here the cams (12) fit between the forks (7) of said sheet conveyance trolleys (4). The cams (12) are set up on a carrier (13), and the carrier (13) is set up on a mobile stop table (14). The stop table (14) is placed on a base (16), for example with two hinging rods (15). The stop table can be moved by means of a controlled drive mechanism (not shown) between a flapped-down position (Fig. 5) and a flapped-up position (Figs. 6 and 7). In the flapped-down position a sheet (8) lying on a passing sheet conveyance trolley can pass freely without coming into contact with the cams (12), Fig. 5. In the flapped-up position, Figs. 6, 7 and 8, the forks (7) of a passing sheet conveyance trolley pass between the cams (12), and a sheet (8) lying on said sheet conveyance trolley (4) knocks against the cams (12), so that the sheet (8) is brought to a standstill above the stacking point (3), while the sheet conveyance trolley (4) moves further so that the sheet (8) slides off the sheet conveyance trolley (4) and goes onto the stacking point (3).

In order to prevent the sheets (8) from being damaged or losing their direction relative to the sheet conveyance trolley through knocking against the cams (12), the cams (12) are also arranged so that they can be moved to and fro along a path parallel to the direction of movement of the sheet conveyance trolleys (4) at said cams (12), and said cams are provided with drive means (16). Said drive means (16) move the cams (12) in a first phase in the same direction as that of the sheet conveyance trolley (4) at a speed which decreases from practically the sheet conveyance trolley speed to a standstill, and in a second phase return the cams (12) to their initial position.

The carrier (13) of the cams (12) is connected to the stop table (14), for example, by means of several guides (17). Said guides (17) allow the cams (12) to move to and fro over a limited path along the stop table (14) in a direction parallel to the direction of movement of the sheet conveyance trolley (4) at said stacking point (3). The drive means (16), Figs. 7 and 8, comprise a cam plate (18) placed against the side of all sheet conveyance trolleys (4) and a cam follower (19) which is placed on each stop table (14) and can cooperate with the complate (18) of the passing sheet conveyance trolleys (4) when the stop table (14) is in the flapped-up position, Figs. 7 and 8. The cam follower (19) sits on the hinging connection point (20) of two rods (21, 22). The other end of the first rod (21) is rotatably connected to a shaft (23) on the carrier (13) of the cams (12), while the second rod (22) is rotatably connected to a shaft (24) on the stop table (14). The second rod (22) projects beyond the shaft (24) and the end (25) of said rod (22) is connected to a spring (26) which acts on the stop table (14). Said spring (26) pulls the carrier (13) of the cams (12) to the initial position by means of the rods (21, 22). In that position the rods (21, 22) are at an angle to each other. The shape of the cam plate (18) is such that the cam follower (19) runs up against an upgoing part (27), so that the rods (21, 22) are extended and the cams (12) are pressed backwards in the direction of movement of the sheet conveyance trolley (4). The upgoing part (27) here determines the speed development, which is such that the difference in speed between a sheet (8) lying on a sheet conveyance trolley (4) and the cams (12) is minimal at the moment when said sheet (8) knocks against the cams (12). After the mating between cam plate (18) and cam follower (19) has taken the carrier (13) of the cams (12) to its extreme position, said carrier (13) returns to its initial position under the influence of the spring (26) and a downgoing part (28) of the cam plate (18), so that the sheet (8) will be taken above the stacking point (3).

The sheet conveyance trolleys (4) of the device according to the invention are also provided with a clamping device which can clamp the loaded sheets (8), and which is opened during loading and unloading of the sheets (8). This clamping device must clamp the sheets (8) firmly on the sheet conveyance trolleys (4), so that at a high speed of the conveyor track (1) said sheets do not lose their direction relative to the sheet conveyance trolleys (4) when bends are being taken or when they knock against the cams (12), or during any other movements producing shocks or impacts. It is important for the sheets (8) to retain their direction relative to the sheet conveyance trolleys (4), because that direction determines the direction in which the sheets (8) come to rest on the stacking points (3).

Said clamping device comprises a shaft (29) which is rotatably connected to the sheet conveyance trolleys, Figs. 6 and 8, and on which a lever (30) is placed at the level of each fork (7). A pressure roller (31), which in the idle position rests on the top surface of the fork (7) or of a sheet (8) lying on the forks (7), is provided on the end of said levers (30). The levers (30) are pressed by a spring (32) with their pressure roller (31) onto said top surface. The end of the shaft (29) is provided with a downward-projecting lever (33) whose end is provided with a stop roller (34). On the other hand, the stop table (14) is provided with a stop (35) against which the stop roller (34) runs, Fig. 6, when the stop table is in the flapped-up position, so that the shaft (29) is turned, the levers (30) are raised, and the sheet (8) is released. Such a stop (36) is also provided at the loading device for opening the clamping device.

The stacking points (3) of the device according to the invention are preferably loading tables whose top surface can be taken below the passing sheet conveyance trolleys if a sheet has to be unloaded onto said stacking point. This means that the height which the sheet falls after being pushed from the forks can be kept as low as possible, which again prevents damage and twisting of the sheet.

The device according to the invention has the great advantage that the sheet conveyance trolleys need not be at a standstill for loading and unloading of sheets. This means that the sheet conveyance trolleys can be driven continuously, which is easy to achieve with a simple centralized drive system. If the loading and unloading of sheets can take place only when the sheet conveyance trolleys are at a standstill, great forces have to be exerted and absorbed in order to pull everything into motion again and to bring it to a standstill. Such a system would also have difficulty in achieving the envisaged discharge times. Due to said centralized drive system, no electrical cables or pressure lines need be fed to the moving sheet conveyance trolleys to drive the sheet conveyance trolleys. This again permits a relatively simple design of the conveyor track and many possible types of path of said conveyor track. Nor do the sheet conveyance trolleys have to be provided with a power source for loading and unloading of sheets. Through the control of the stop tables, a sheet lying on a sheet conveyance trolley can be unloaded at any desired stacking point. It is the position of the stop table which determines the opening of the clamping device and the operation of the cams.

## Claims

1. Discharge and stacking device for sheet material, comprising a closed conveyor track (1) whose path runs over one or more stacking points (3), several sheet conveyance trolleys (4) which are guided around on or at the conveyor track (1), means for loading one or more sheets (8) on the sheet conveyance trolleys (4), and cams (12) which are disposed at the stacking points (3) and are displaceable between a position outside the path of the sheets (8) lying on the sheet conveyance trolleys (4) and a position at the level of the sheets (8) lying on a sheet conveyance trolley (4), the sheets (8) lying on a sheet conveyance trolley (4) knocking against the cams (12) and thereby being pushed off the further moving sheet conveyance trolley (4).

2. Discharge and stacking device according to Claim 1, characterized in that the cams (12) are displaceable to and fro along a path in a direction which is essentially parallel to the direction of movement of the sheet conveyance trolleys (4), and are provided with drive means (16) which drive the cams (12) in a first phase in the same direction as that of the sheet conveyance trolleys (4), and at a speed which decreases from practically the sheet conveyance trolley (4) speed to a standstill, and which in a second phase returns the cams (12) to their initial position.

3. Discharge and stacking device according to Claim 2, characterized in that the drive means (16) for the cams (12) partially consist of a cam plate (18) placed on the sheet conveyance trolleys (4) and a cam follower (19) which is connected to the cams (12), and which mates with the cam plate (18) the moment the cams (12) are in their position at the level of the sheets (8) lying on a sheet conveyance trolley (14).

4. Discharge and stacking device according to Claim 3, characterized in that the cam follower (19) is located on the hinging connection point (20) of two rods (21, 22) disposed at an angle to each other and each rotatably connected to a point of application (21, 22), the two points of application (23, 24) lying on a line which is essentially parallel to the direction of movement of the sheet conveyance trolleys (4), and the first point of application (23) being connected to the mobile cams (12), while the second point of application (24) is connected to a fixed bottom part (14), and the shape of the cam plate (18) being such that rods (21, 22) are mutually extended when the cam follower (19) mates with the cam plate (18).

5. Discharge and stacking device according to Claim 2, characterized in that the drive means (16) of the cams (12) partly consist of elastic element (26) which is stretched between the cams (12) and fixed point (14), and which forces the cams (12) to their initial position.

6. Discharge and stacking device according to Claim 1, characterized in that the sheet conveyance trolleys (4) are provided with a clamping device which can clamp the loaded sheets (8) and is opened during loading and unloading of sheets (8).

7. Discharge and stacking device according to Claim 5, characterized in that the clamping device comprises one or more levers (30) which are disposed on a shaft (29) rotatably connected to the sheet conveyance trolley (4), and which are pressed by a spring (32) against the bearing surface of the sheet conveyance trolley (4), and which are raised by means of a stop roller (34) which is connected eccentrically to the shaft (29) and mates with stops (35) which are disposed at the same level as the stacking points (3) and can be moved between a position outside the path of the stop roller (34) and a position in which the stop roller (34) runs against the stop (35), so that the shaft (29) and the levers (30) turn through a certain angle.

8. Discharge and stacking device according to one of the preceding claims, characterized in that the cams (12) are fixed on a carrier (13), the carrier (13) is fixed by means of one or more guides (17) so that it moves on a stop table (14), in that the stop (35) is fixed on the stop table (14), in that the points of application (23, 24) of the rods (21, 22) are situated on the carrier (13) and the stop table (14) respectively, and in that the stop table (14) is disposed so that it can move between a position outside the path of the sheet conveyance trolleys (4) and a position in which the sheets (8) lying on the sheet conveyance trolley (4) knock against the cams (12), the cam plate (18) mating with the cam follower (19) and the stop roller (34) mating with the stop (35).

9. Discharge and stacking device according to Claim 1, characterized in that the stacking points (3) are loading tables whose top surface can be taken below the sheet conveyance trolleys (4).

10. Discharge and stacking device for sheet material, comprising a closed conveyor track (1) whose path runs over one or more stacking points (3), several sheet conveyance trolleys (4) which are guided around on or at the conveyor track (1) and the bearing surface of which is made up of several forks (7), means for unloading sheets (8) lying on the sheet conveyance trolleys (4) at the stacking points (3), and a loading conveyor belt (9) which partially runs alongside the path of the conveyor track (1) and is made up of several parallel belts (10) which are separated by a space and between which the forks (7) of the sheet conveyance trolleys (4) can move, and which moves in the same direction and at a greater speed than the speed of the sheet conveyance trolleys (4).

11. Discharge and stacking device according to Claim 10, characterized in that displaceable strips are provided between the belts (10) of the loading conveyor belt (9), said strips together forming a loading table (11) which is movable between a position in which a finished sheet is collected and a position in which the top surface of said loading table lies below the top surface of the loading conveyor belt (9), and said sheet is carried along by the loading conveyor belt (9).

12. Discharge and stacking device according to Claim 11, characterized in that between the place where the finished sheets are delivered and the beginning of the conveyor belt (9) provision is made for an aperture (39) through which certain finished sheets can be discharged, and which can be opened or closed by the loading table (11) or any other means according to the type of the following finished sheet.

13. Discharge and stacking device according to Claim 10, characterized in that the sheet conveyance trolleys (4) are provided with a clamping device which can clamp the loaded sheets (8), and which is opened during the loading and unloading of sheets (8).

14. Discharge and stacking device according to Claim 13, characterized in that the clamping device comprises one or more levers (30) which are mounted on a shaft (29) rotatably connected to the sheet conveyance trolley (4), and which are pressed by a spring (32) against the bearing surface, comprising forks (7), of the sheet conveyance trolley (4), and which are raised by means of a stop roller (34) which is connected eccentrically to the shaft (29) and cooperates with a stop (36) which is disposed at the level of the loading conveyance belt (9) and against which the stop roller (34) runs so that the shaft (29) turns with the levers (30) through a certain angle.

15. Sheet processing line provided with a discharge and stacking device according to one or more of the preceding claims.

FIG. 1

EP 0 374 989 A1

FIG. 2

FIG. 3

_FIG. 4_

EP 0 374 989 A1

FIG.5BB

FIG.6BB

EP 0 374 989 A1

FIG. 7 CC

FIG.8 AA

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3116835 (T.A.BRANDON)<br>* column 3, line 71 - column 5, line 35; figures * | 1, 10 | B65G57/14 |
| Y | | 6 | |
| Y | DE-A-3002591 (VEB KOMBINAT POLYGRAPH WERNER LAMBERZ)<br>* the whole document * | 6 | |
| A | | 7 | |
| A | US-A-3730517 (NORTON)<br>* the whole document * | 2 | |

TECHNICAL FIELDS SEARCHED (Int. Cl.5 )

B65H
B65G
B07C

The present search report has been drawn up for all claims

| Place of search | Date of completion of the search | Examiner |
|---|---|---|
| THE HAGUE | 29 MARCH 1990 | MEULEMANS J.P. |

EPO FORM 1503 03.82 (P0401)